# EUROPÄISCHE PATENTSCHRIFT

(11) **EP 3 203 880 B1**
(45) Veröffentlichungstag und Bekanntmachung des Hinweises auf die Patenterteilung: **07.08.2019**
(21) Anmeldenummer: 15828329.1
(22) Anmeldetag: 08.10.2015
(51) Int. Cl.: A47J 23/00

(54) **ANORDNUNG MIT MEHREREN FEDERELEMENTEN FÜR EINE POLSTERUNTERLAGE**
ARRANGEMENT WITH A PLURALITY OF SPRING ELEMENTS FOR A CUSHION SUPPORT
SYSTÈME À PLUSIEURS ÉLÉMENTS ÉLASTIQUES POUR UNE BASE DE MATELASSAGE

(30) Priorität: 08.10.2014 DE 202014104824 U
(43) Veröffentlichungstag der Anmeldung: 16.08.2017
(73) Patentinhaber: Froli Kunststoffwerk Heinrich Fromme, Inhaberin Margret Fromme-Ruthmann e. Kfr., 33758 Schloß Holte-Stukenbrock (DE)
(72) Erfinder: FROMME-RUTHMANN, Margret, 33758 Schloß Holte-Stukenbrock (DE)
(74) Vertreter: Bittner, Thomas L.
(86) Internationale Anmeldenummer: PCT/DE2015/100419
(87) Internationale Veröffentlichungsnummer: WO 2016/055057

(56) Entgegenhaltungen:
- EP-A2- 1 302 135
- DE-U1-202010 016 240

## Beschreibung

Die Erfindung betrifft eine Anordnung mit mehreren Federelementen für eine Polsterunterlage.

### Hintergrund

Derartige Anordnungen werden genutzt, um nachgebende Polsterunterlagen herzustellen, auf der dann ein Polster zum Ausbilden einer Sitz- oder Liegefläche abgelegt werden kann. Es sind Anordnungen mit mehreren Federelementen bekannt, bei denen die Federelemente einer regelmäßigen oder einer unregelmäßigen Struktur entsprechend über eine Fläche verteilt angeordnet sind. Die Federelemente verfügen über eine Basis, in die bei der Montage des Federelementes auf eine Unterlage zur Auflage kommt, sowie einen Auflageteller und hierzwischen angeordnete Federarme. Die Auflageteller der mehreren Federelemente bilden gemeinsam eine Auflagefläche für das Polster. Es sind Ausführungen bekannt, bei denen jedes einzelne Federelement auf der Unterlage separat befestigt wird, zum Beispiel mittels einer Schraube oder eines Nagels, mit dem die Basis auf der Unterlage befestigt wird, bei der es sich zum Beispiel um eine Holzplatte handeln kann. Auch sind Anordnungen bekannt, bei denen mehrere Federelemente nebeneinander entlang einer Leiste auf diese Art und Weise befestigt sind.

Darüber hinaus sind Anordnungen mit mehreren Federelementen bekannt, bei denen die einzelnen Federelemente mit Verbindungselementen verbunden werden, zum Beispiel mittels Klemmen- oder Steckverschluss. Mit Hilfe der Verbindungselemente wird dann eine Verbindungsstruktur hergestellt, die die relative Lage der Federelemente zueinander auf der Unterlage sichert. Die Befestigung der so ausgebildeten Anordnung mit den Federelementen auf der Unterlage kann dann zum Beispiel mit Hilfe von Schraubmitteln oder Nägeln erfolgen, die die Basis der Federelemente und/oder die zwischen den Federelementen ausgebildeten Verbindungselemente durchgreifen. Anordnungen welche der Erfindung ähnlich sind werden z.B. in der DE 202010016240 U1 oder der EP 1302135 A2 beschrieben.

### Zusammenfassung

Aufgabe der Erfindung ist es, eine Anordnung mit mehreren Federelementen für eine Polsterunterlage anzugeben, bei der die Nutzungseigenschaften verbessert sind, insbesondere hinsichtlich einer einfachen Montage.

Die Aufgabe wird gelöst durch eine Anordnung von Federelementen für eine Polsterunterlage nach dem unabhängigen Anspruch 1. Ausgestaltungen sind Gegenstand von abhängigen Unteransprüchen.

Nach einem Aspekt ist eine Anordnung von Federelementen für eine Polsterunterlage geschaffen. Die Polsterunterlage weist mehrere Federelemente sowie Verbindungselemente auf, über die die Federelemente untereinander verbunden sind, derart, dass die Federelemente in ihrer Relativlage zueinander fixiert sind. Bei den Federelementen sind zwischen einer Basis und einem Auflageteller jeweils Federarme angeordnet. Die Federelemente der Anordnung sind nebeneinander liegend angeordnet, derart, dass die Auflageteller der mehreren Federelemente gemeinsam eine Auflagefläche aufspannen. Die Federelemente können einer regelmäßigen oder einer unregelmäßigen Anordnung entsprechend angeordnet sein. Die Verbindungselemente, welche die Relativlage der Federelemente zueinander sichern, sind einstückig ausgebildet und an die Federelemente einstückig angeformt.

Hierdurch ist die Anordnung mit den mehreren Federelementen auf einfache und effiziente Art und Weise auf einer Unterlage montierbar, wobei mehrere Anordnungen mit Federelementen zum Ausbilden der Polsterunterlage kombiniert werden können.

Die Federarme zwischen der Basis und dem Auflageteller, welche direkt oder über Anschlussstücke in die Basis und / oder den Auflageteller mündend ausgeführt sein können, können abschnittsweise oder vollständig als Blattfederarme ausgebildet sein. Die Federarme eines Federelementes können mit derselben Federkonstante hergestellt sein. Es können Federelemente in der Anordnung miteinander kombiniert werden, bei denen die Federarme unterschiedliche Federkonstanten aufweisen. Hierdurch kann zum Beispiel der Härtegrad abschnittsweise unterschiedlich hergestellt werden für die Polsterunterlage. Die Federarme können bei den Federelementen von der Basis ausgehend nach Außen verlaufen.

Auch die Federelemente können jeweils einstückig gebildet sein. Alternativ können die Federelemente mehrstückig gebildet sein, zum Beispiel mit mehreren zusammensteckbaren Abschnitten.

Es können pro Federelement drei, vier oder mehr Federarme vorgesehen sein. Die Federarme können in äquidistanten Abständen auf der Basis umlaufend angeordnet sein.

Die Verbindungselemente können an der Basis und / oder in einem zur Basis benachbarten Abschnitt der Federarme an die Federelemente angeformt sein.

Der Auflageteller der Federelemente ist mit mehreren getrennten Teilauflagetellern gebildet, die über Zwischenräume voneinander getrennt sind. Die Zwischenräume können als Spalt gebildet sein, wobei eine im Wesentlichen gleichbleibende Spaltbreite zwischen einander gegenüberliegenden Rändern von benachbarten Teilauflagetellern vorgesehen sein kann. Deckflächen der Teilauflageteller können zum Aufspannen der Auflagefläche in einer Ebene liegen. Es können zwei oder mehr, beispielsweise vier Teilauflageteller an einem Federelement vorgesehen sein. Die Teilauflageteller können aufgrund der getrennten Ausbildung unabhängig voneinander federn bei Druckbeaufschlagung. Die Teilauflageteller eines Federelementes können alle form- und aufbaugleich oder verschieden ausgeführt sein.

Die Verbindungselemente sind beim Blick von oben auf den Auflageteller in den Zwischenräumen angeordnet. Die Verbindungselemente liegen in der rückwärtigen Verlängerung der Zwischenräume beim Blick von oben auf den Auflageteller, soweit sie im Bereich der Fläche unterhalb des Auflagetellers verlaufen, sei es teilweise oder vollständig.

Die mehrere getrennten Teilauflageteller sind an einem oder mehreren individuell ausschließlich dem jeweiligen Teilauflageteller zugeordneten Federarmen angeordnet. Die Federarmgestaltung kann für die Teilauflageteller eines Federelementes für alle Teilauflageteller gleich sein. Alternativ können unterschiedliche Federarmgestaltungen für verschiedene Teilauflageteller eines Federelementes vorgesehen sein, zum Beispiel zum Ausbilden eines unterschiedlichen Federverhaltens.

Die mehreren getrennten Teilauflageteller können sich beim Blick von oben auf den Auflageteller seitlich entlang des oder der den Teilauflageteller tragenden Federarme erstrecken. Die einander gegenüberliegenden Ränder der Teilauflageteller einerseits und der Federarme andererseits können beim Blick von oben auf den Auflageteller im Wesentlichen parallel zueinander verlaufen. Alternativ kann eine Abstandsverjüngung nach radialaußen oder nach radialinnen vorgesehen sein.

Die mehreren getrennten Teilauflagetellern können beim Blick von oben auf den Auflageteller zumindest am Innenrand eine U-Form aufweisen. Die U-Form kann bei dem Teilauflageteller in Verbindung mit den den zugeordneten Federarmen gegenüberliegenden Randbereichen vorgesehen sein, wenn das Auflageelement von oben betrachtet wird. Im Bereich des Bodens der U-Ausnehmung (U-Rand) kann der Federarm an den Teilauflageteller angeformt sein, zum Beispiel einstückig.

Beim Blick von oben auf die nebeneinander liegend angeordneten Federelemente können die Verbindungselemente sowie die Federelemente überlappungsfrei gebildet sein. Beim Blick von oben auf den Auflageteller des Federelements ist dieses frei von irgendwelchen Überlappungen beliebiger Abschnitte des Federelements, sei es innerhalb und außerhalb der Federelemente. Dieses gilt auch bei Einbeziehung der Verbindungselemente.

Beim Blick von oben können Spalten zwischen gegenüberliegenden Rändern im Bereich eines Federelements mit im Wesentlichen gleicher Spaltbreite gebildet sein. Im Bereich eines Spalts kann die Spaltbreite im Wesentlichen gleichbleibend sein.

Die Verbindungselemente können einem Rechteckraster entsprechend verlaufen. Auch andere Rasterstrukturen können vorgesehen sein, beispielsweise Vieleck, Dreieck oder Kreis.

Bei den Federelementen können distale Enden, die in Bezug auf zur Basis proximale Enden, radial außenliegend angeordnet sind, in den Auflageteller münden. Bei dieser Ausführungsform ist das proximale Ende des Federarms in Bezug auf die Basis radial außenliegend im Vergleich zu distalem Ende. Die Federarme erstrecken sich also nach radial außen, wobei im Bereich eines an den Auflageteller mündenden Endabschnitts eine teilweise Ausrichtung des Federarms nach radial innen vorgesehen sein kann, zum Beispiel über ein Anschlussstück an den Federarm.

Die Federarme können über eine Einschnürung an den Auflageteller koppeln. Die Materialeinschnürung kann auf gegenüberliegenden Seiten umlaufend gebildet sein. Eine Breite der Federarme, zum Beispiel beim Blick von oben auf das Federelement, kann sich in Richtung zum Auflageteller hin verjüngen.

In Längsrichtung und / oder in Querrichtung können wenigstens zwei Federelemente nebeneinander liegend und über der Verbindungselemente verbunden angeordnet sein. In einer Anordnung können auch drei oder mehr Federelemente mit Hilfe der Verbindungselemente einstückig verbunden sein. Zum Beispiel ist auch eine Anordnung von 4 x 4 Federelementen möglich.

Die Anordnung von Federelementen kann aus einem Elastomer hergestellt sein, zum Beispiel einem thermoplastischen Elastomer. Die Herstellung der Anordnung von Federelementen, die über die Verbindungselemente einstückig verbunden sind, kann als Spritzgussbauteil erfolgen.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung von Federelementen für eine Polsterunterlage von oben und von vorn,
- Fig. 2: eine perspektivische Darstellung der Anordnung aus Fig. 1 von schräg oben,
- Fig. 3: eine perspektivische Darstellung der Anordnung aus Fig. 1 von schräg unten und
- Fig. 4: eine perspektivische Darstellung eines Stapels von drei aufeinander gestapelten Anordnungen mit mehreren Federelementen.

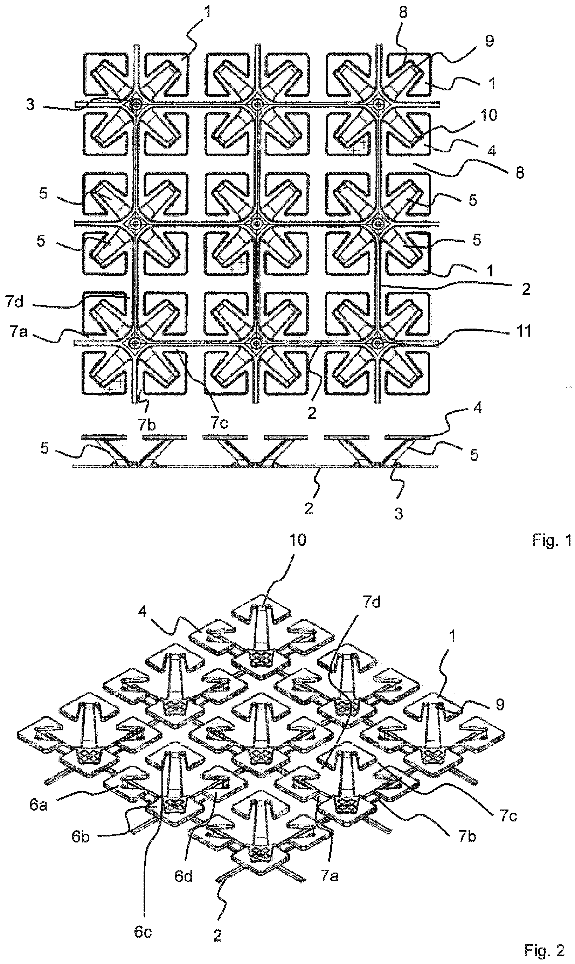

Fig. 1 zeigt eine schematische Darstellung einer Anordnung mit mehreren Federelementen 1, die über Verbindungselemente 2 miteinander verbunden sind, wobei die Verbindungselemente 2 zwischen den Federelementen 1 einstückig ausgeführt und an dieser einstückig angeformt sind. Die dargestellte Anordnung mit den mehreren Federelementen 1 kann beispielsweise mittels Spritzgießen hergestellt werden, wobei als Material ein Elastomer, insbesondere ein thermoplastisches Elastomer verwendet werden kann.

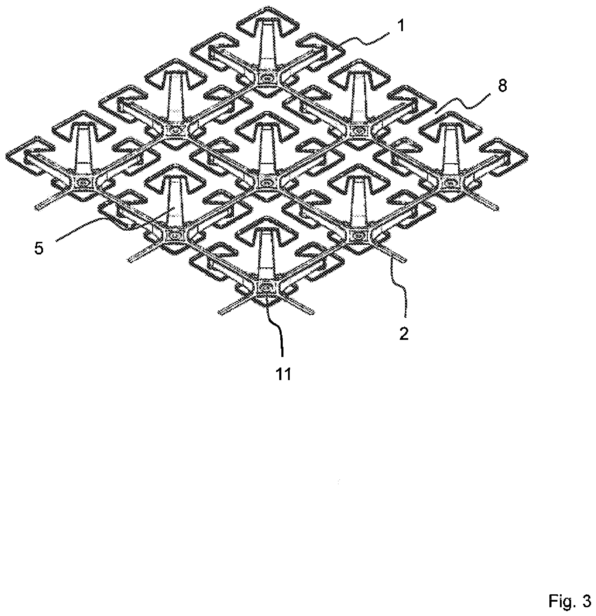

Die Fig. 2 und 3 zeigen perspektivische Darstellungen der Anordnung der mehreren Federelemente 1 aus Fig. 1 von schräg oben und schräg unten.

Die Federelemente 1 weisen jeweils eine Basis 3 sowie einen Auflageteller 4 und hierzwischen angeordnete Federarme 5 auf. Bei der gezeigten Ausführungsform sind jeweils vier Federarme 5 äquidistant um die Basis 3 herum angeordnet. Ausgehend von der Basis 3 erstrecken sich die Federarme 5 zum Auflageteller 4, der bei den gezeigten Federelementen 1 mit vier Teilauflagetellern 6a, ..., 6d gebildet ist. Den Teilauflagetellern 6a, ..., 6d ist ein jeweiliger Federarm 5 zugeordnet, der den Teilauflageteller 6a, ..., 6d individuell trägt.

Zwischen den Auflagetellern 6a, ..., 6d sind Trenn- oder Zwischenräume 7a, ..., 7d vorgesehen, in denen, bei Betrachtung der Federelemente 1 von oben (vgl. Fig. 1) die Verbindungselemente 2 verlaufen.

Bei der gezeigten Ausführungsform sind die Verbindungselemente 2 einstückig an die jeweilige Basis 3 angeformt.

Bei der Betrachtung der Federelemente 1 von oben gemäß Fig. 1 verlaufen Spalte 8 zwischen gegenüberliegenden Rändern der Teilauflageteller 6a, ..., 6d einerseits und des zugeordneten Federarms 5 andererseits. Der Teilauflageteller 6a, ..., 6d selbst ist über eine Materialeinschnürung 9 an den zugeordneten Federarmen 5 angeformt, ebenfalls einstückig. Der Federarm 5 mündet in den Teilauflageteller 6a, ..., 6d in einem Bereich 10, welcher im Bodenbereich einer U-Form ausgebildet ist.

Bei der gezeigten Ausführungsform der Anordnung mit den Federelementen 1 verjüngt sich die Breite der Federarme 5 zum Auflageteller 6a, ..., 6d hin.

Die jeweilige Basis 3 der Federelemente 1 weist einen Durchbruch 11 auf, der genutzt werden kann, um die Anordnung der Federelemente 1 auf eine Unterlage mittels Schraube und / oder Nagel zu befestigen. Alternativ oder ergänzend können derartige Durchbrüche im Bereich der Verbindungselemente 2 zwischen den Federelementen 1 vorgesehen sein (nicht dargestellt).

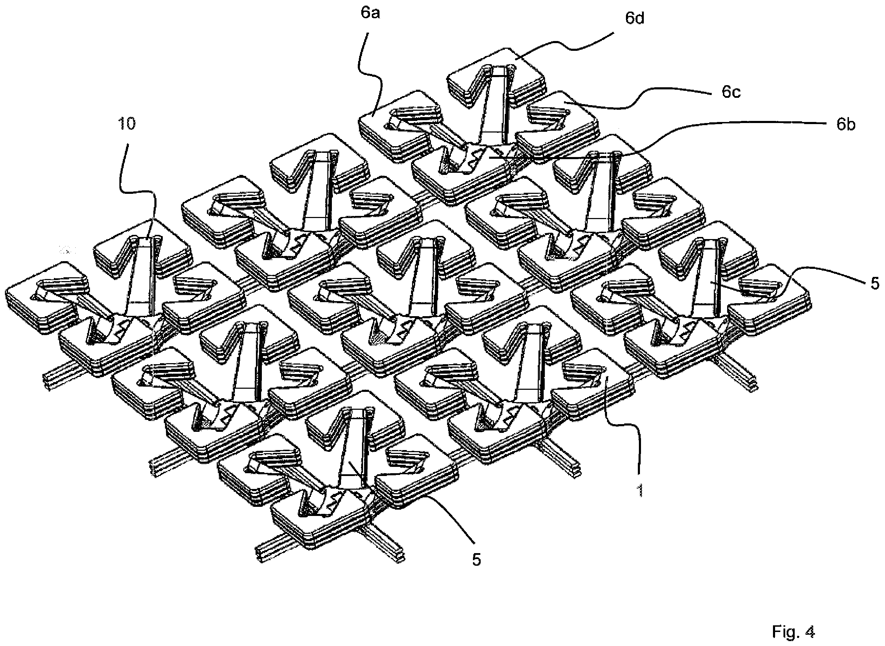

Fig. 4 zeigt eine perspektivische Darstellung eines Stapels 20, bei dem drei Anordnungen mit mehreren Federelementen 1, die der Anordnung aus den Fig. 1 bis 3 entsprechend ausgestaltet sind, übereinander gestapelt sind. Es ergibt sich, dass für übereinanderliegende Anordnungen von Federelementen 1 jeweils Ober- und Unterseite aufeinanderliegen, sowohl im Bereich der Teilauflageteller 6a, ..., 6d im Bereich der Federarme 5 wie auch im Bereich der Verbindungselemente 2. Die hier beschriebene Anordnung von Federelementen 1 ist also stapelfähig, was zum Beispiel den Transport erleichtert. Auch kann vorgesehen sein, beim Ausbilden einer Polsterunterlage einen solchen Stapel von Anordnungen von Federelementen 1 zu nutzen, zum Beispiel zum Einstellen eines bestimmten Härtegrads der Polsterauflage.

## Patentansprüche

1. Anordnung von Federelementen für eine Polsterunterlage, mit
- mehreren Federelementen (1), bei denen zwischen einer Basis (3) und einem Auflageteller (4) jeweils Federarme (5) angeordnet sind, wobei die Federelemente (1) nebeneinander liegend angeordnet sind, derart, dass die Auflageteller (4) der mehreren Federelemente (1) gemeinsam eine Auflagefläche aufspannen, und
- Verbindungselementen (2), über die die Federelemente (1) untereinander verbunden sind, derart, dass die Federelemente (1) in ihrer Relativlage zueinander fixiert sind,
wobei die Verbindungselemente (2) einstückig ausgebildet und an die Federelemente (1) einstückig angeformt sind, **dadurch gekennzeichnet, dass** der Auflageteller (4) der Federelemente (1) jeweils mit mehreren getrennten Teilauflagetellern (6a, ..., 6d) gebildet ist, die über Zwischenräume voneinander getrennt sind, wobei die Verbindungselemente (2) beim Blick von oben auf den Auflageteller (4) in den Zwischenräumen verlaufen und die mehreren getrennten Teilauflageteller (6a, ..., 6d) an einem oder mehreren individuell ausschließlich dem jeweiligen Teilauflageteller (6a, ..., 6d) zugeordneten Federarmen (5) angeordnet sind.

2. Anordnung nach Anspruch 1, **dadurch gekennzeichnet, dass** die Verbindungselemente (2) an der Basis (3) und / oder in einem zur Basis (3) benachbarten Abschnitt der Federarme (5) an die Federelemente (1) angeformt sind.

3. Anordnung nach mindestens einem der Ansprüche 1 oder 2, **dadurch gekennzeichnet, dass** die mehreren getrennten Teilauflageteller (6a, ..., 6d) sich beim Blick von oben auf den Auflageteller seitlich entlang des oder der den Teilauflageteller (6a, ..., 6d) tragenden Federarme erstrecken.

4. Anordnung nach mindestens einem der vorangehenden Ansprüche, **dadurch gekennzeichnet, dass** die mehreren getrennten Teilauflageteller (6a, ..., 6d) beim Blick von oben auf den Auflageteller zumindest am Innenrand eine U-Form aufweisen.

5. Anordnung nach mindestens einem der vorangehenden Ansprüche, **dadurch gekennzeichnet, dass** beim Blick von oben auf die nebeneinander liegend angeordneten Federelemente (1) die Verbindungselemente (2) sowie die Federelemente (1) überlappungsfrei gebildet sind.

6. Anordnung nach Anspruch 5, **dadurch gekennzeichnet, dass** beim Blick von oben Spalten zwischen gegenüberliegenden Rändern im Bereich eines Federelements mit im Wesentlichen gleicher Spaltbreite gebildet sind.

7. Anordnung nach mindestens einem der vorangehenden Ansprüche, **dadurch gekennzeichnet, dass** die Verbindungselemente (1) einem Rechteckraster entsprechend verlaufen.

8. Anordnung nach mindestens einem der vorangehenden Ansprüche, **dadurch gekennzeichnet, dass** bei den Federelementen (1) distale Enden, die gegenüber zur Basis (3) proximalen Enden, radial außenliegend angeordnet sind, an den Auflageteller koppeln.

9. Anordnung nach mindestens einem der vorangehenden Ansprüche, **dadurch gekennzeichnet, dass** die Federarme (5) über eine Einschnürung in den Auflageteller münden.

10. Anordnung nach mindestens einem der vorangehenden Ansprüche, **dadurch gekennzeichnet, dass** in Längsrichtung und / oder in Querrichtung wenigstens zwei Federelemente nebeneinander liegend und über die Verbindungselemente (2) verbunden angeordnet sind.

11. Anordnung nach mindestens einem der vorangehenden Ansprüche, **gekennzeichnet durch** eine stapelfähige Ausbildung, derart, dass in einem Stapel für die Verbindungselemente (2) wie auch die Federelemente (1) Unterseiten und Oberseiten wenigstens abschnittsweise aufeinanderliegend anordenbar sind.

12. Stapel von Federelementanordnungen, die jeweils einer Anordnung nach mindestens einem der vorangehenden Ansprüche entsprechend ausgebildet sind, wobei bei übereinanderliegenden Federelementanordnungen für die Verbindungselemente (2) wie auch die Federelemente (1) Unterseiten und Oberseiten wenigstens abschnittsweise aufeinanderliegend angeordnet sind.

## Claims

1. An arrangement of spring elements for a cushion support, comprising
- a plurality of spring elements (1), at which between a base (3) and a support disc (4) spring arms (5) are arranged in each case, wherein the spring elements (1) are arranged lying next to one another in such a manner that the support discs (4) of the plurality of spring elements (1) jointly span a support area, and
- connecting elements (2), via which the spring elements (1) are interconnected in such a manner that the spring elements (1) are fixed in their relative position with respect to one another,
- wherein the connecting elements (2) are formed in one piece and are integrally moulded onto the spring elements (1), **characterized in that** the support disc (4) of the spring elements (1) is formed in each case with a plurality of separate part support discs (6a, ..., 6d), which are separated from one another via intermediate spaces, wherein the connecting elements (2), when viewing the support disc (4) from above, run in the intermediate spaces and the plurality of separate part support discs (6a, ..., 6d) are arranged on one or multiple spring arms (5) which are individually assigned exclusively to the respective part support disc (6a, ..., 6d).

2. The arrangement according to claim 1, **characterized in that** the connecting elements (2) are moulded onto the spring elements (1) at the base (3) and/or in a section of the spring arms (5) that is adjacent to the base (3).

3. The arrangement according to at least one of claims 1 or 2, **characterized in that** when viewing the support discs from above, the plurality of separate part support discs (6a, ..., 6d) extend laterally along the spring arm or the spring arms supporting the part support disc (6a, ..., 6d).

4. The arrangement according to at least one of the preceding claims, **characterized in that** the plurality of separate part support discs (6a, ..., 6d) when viewing the support disc from above have a U-shape at least at the inner edge.

5. The arrangement according to at least one of the preceding claims, **characterized in that** when viewing the spring elements (1) arranged lying next to one another from above, the connecting elements (2) and the spring elements (1) are formed free of overlap.

6. The arrangement according to claim 5, **characterized in that** when viewed from above, gaps are formed between opposite edges in the region of a spring element with substantially the same gap width.

7. The arrangement according to at least one of the preceding claims, **characterized in that** the connecting elements (1) run according to a rectangular grid.

8. The arrangement according to at least one of the preceding claims, **characterized in that** at the spring elements (1), distal ends, which are arranged radially outside with respect to proximal ends with respect to the base (3), couple to the support disc.

9. The arrangement according to at least one of the preceding claims, **characterized in that** the spring arms (5) open into the support disc via a constriction.

10. The arrangement according to at least one of the preceding claims, **characterized in that** in the longitudinal direction and/or in the transverse direction, at least two spring elements are arranged lying next to one another and connected via the connecting elements (2).

11. The arrangement according to at least one of the preceding claims, **characterized by** a stackable design in such a manner that in a stack for the connecting elements (2) as well as the spring elements (1), lower sides and top sides can be arranged to lie on top of one another at least in sections.

12. A stack of spring element arrangements, which in each case are formed into an arrangement according to at least one of the preceding claims, wherein in the case of spring element arrangements lying on top of one another for the connecting elements (2) as well as the spring elements (1), lower sides and top sides are arranged to lie on top of one another at least in sections.

## Revendications

1. Agencement d'éléments à ressort pour une base de rembourrage avec
- plusieurs éléments à ressort (1), pour lesquels des bras de ressort (5) sont respectivement disposés entre une base (3) et un disque d'appui (4), les éléments à ressort (1) étant disposés les uns à côté des autres de telle sorte que les disques d'appui (4) des plusieurs éléments à ressort (1) fixent conjointement une surface d'appui, et
- des éléments de liaison (2) par lesquels les éléments à ressort (1) sont reliés entre eux de telle sorte que les éléments à ressort (1) sont fixés les uns aux autres dans leur position relative,
les éléments de liaison (2) étant constitués en une seule pièce et étant conformés en une seule pièce sur les éléments à ressort (1), **caractérisé en ce que** le disque d'appui (4) des éléments à ressort (1) est formé respectivement avec plusieurs disques d'appui partiels séparés (6a, ..., 6d), qui sont séparés l'un de l'autre par des espaces intermédiaires, les éléments de liaison (2) passant, en vue de dessus sur le disque d'appui (4), dans les espaces intermédiaires, et les plusieurs disques d'appui partiels séparés (6a, ..., 6d) étant disposés sur un ou plusieurs bras de ressort (5) attribués individuellement exclusivement au disque d'appui partiel respectif (6a, ..., 6d).

2. Agencement selon la revendication 1, **caractérisé en ce que** les éléments de liaison (2) sont conformés sur les éléments à ressort (1) sur la base (3) et/ou dans une section voisine de la base (3) des bras de ressort (5).

3. Agencement selon au moins l'une quelconque des revendications 1 ou 2, **caractérisé en ce que** les plusieurs disques d'appui partiels séparés (6a, ..., 6d) s'étendent, en vue dessus sur le disque d'appui, latéralement le long du ou des bras de ressort supportant les disques d'appui partiels (6a, ..., 6d)

4. Agencement selon au moins l'une quelconque des revendications précédentes, **caractérisé en ce que** les nombreux disques d'appui partiels (6a, ..., 6d) séparés présentent, en vue de dessus sur le disque d'appui, une forme en U au moins sur le bord intérieur.

5. Agencement selon au moins l'une quelconque des revendications précédentes, **caractérisé en ce qu'**en vue de dessus sur les éléments à ressort (1) disposés les uns à côté des autres, les éléments de liaison (2) ainsi que les éléments à ressort (1) sont formés sans chevauchement.

6. Agencement selon la revendication 5, **caractérisé en ce qu'**en vue de dessus, des fentes sont formées entre des bords opposés dans une zone d'un élément à ressort avec une largeur de fente pour l'essentiel identique.

7. Agencement selon au moins l'une quelconque des revendications précédentes, **caractérisé en ce que** les éléments de liaison (1) évoluent conformément à une trame rectangulaire.

8. Agencement selon au moins l'une quelconque des revendications précédentes, **caractérisé en ce que** pour les éléments à ressort (1), des extrémités distales, qui sont disposées radialement à l'extérieur par rapport à des extrémités proximales par rapport à la base (3), accouplent au disque d'appui.

9. Agencement selon au moins l'une quelconque des revendications précédentes, **caractérisé en ce que** les bras de ressort (5) aboutissent par un rétrécissement dans le disque d'appui.

10. Agencement selon au moins l'une quelconque des revendications précédentes, **caractérisé en ce que** dans le sens longitudinal et/ou le sens transversal, au moins deux éléments à ressort sont disposés l'un à côté de l'autre et reliés par les éléments de liaison (2).

11. Agencement selon au moins l'une quelconque des revendications précédentes, **caractérisé par** une configuration empilable de telle sorte que dans un empilement pour les éléments de liaison (2) ainsi que pour les éléments à ressort (1), des côtés inférieurs et des côtés supérieurs peuvent être au moins par secteur disposés les uns sur les autres.

12. Empilement d'agencements d'éléments à ressort, qui sont formés respectivement correspondant à un agencement selon au moins l'une quelconque des revendications précédentes, les côtés inférieurs et les côtés supérieurs étant disposés au moins par secteur empilés les uns sur les autres en ce qui concerne les agencements d'éléments à ressort superposés pour les éléments de liaison (2) ainsi que pour les éléments à ressort (1).
